# EUROPEAN PATENT APPLICATION

(11) **EP 3 249 247 A1**
(43) Date of publication of application: **29.11.2017**
(21) Application number: 17172588.0
(22) Date of filing: 23.05.2017
(51) Int. Cl.: F16C 3/08, F16C 9/02

(54) **LASER HARDENED CRANKSHAFT**

(30) Priority: 25.05.2016 US 201615164189
(71) Applicant: Ford Motor Company, Dearborn, MI 48126 (US)
(72) Inventor: KOPMANIS, Michael A., Monroe, Michigan 48162 (US)
(74) Representative: Harrison IP Limited

(57) **Abstract**

An automotive shaft includes a journal (20) having a crest-to-crest contact surface area (52) defined by and between undercut regions (50) of the shaft, an entirety of the crest-to-crest contact surface area being laser hardened to a depth no greater than 1 mm to form a layer that does not contain unhardened portions.

## Description

### TECHNICAL FIELD

The disclosure relates to crankshaft manufacturing including laser hardening of journal surfaces of a crankshaft or a camshaft.

### BACKGROUND

Crankshaft and camshaft manufacturing includes hardening of a portion of their surfaces to increase their mechanical properties. Typically, induction hardening is used to achieve the hardening. Yet, the inherent nature of the induction process results in numerous disadvantages such as deeper case depths than is necessary and inherent distortion. Alternative methods have been developed, but they are not well suited for high volume production due to batch processing requirements.

### SUMMARY

An automotive shaft is disclosed. The shaft may include a journal having a crest-to-crest contact surface area defined by and between undercut regions of the shaft, an entirety of the crest-to-crest contact surface area being laser hardened to a depth no greater than 1 mm to form a layer that does not contain unhardened portions. The shaft may be a crankshaft or a camshaft. The journal may be a main journal. The entirety of the crest-to-crest contact surface area may be laser hardened to a depth no greater than about 0.5 mm. More than 70% of the layer may have a constant depth. The portion of the crest-to-crest contact surface area may surround an oil hole.

In another embodiment, a crankshaft is disclosed. The crankshaft may include main and pin journals connected to counterweights via undercut regions. One of the journals may have a surface area extending between and terminating at crests formed by two of the undercut regions to define a circumferential band. The entirety of an area of the band may be laser hardened to form a layer that reaches a depth not greater than about 1 mm and that does not contain unhardened portions. The portion of the band may surround an oil hole having an unhardened surface area. The one journal may be a main journal. The layer may reach a depth not greater than about 0.5 mm. More than 70% of the layer may have a constant depth. The layer may have a profile and a rate of change of the profile may be 1 µm in 2 mm. The profile may include a central portion free of concavity.

In yet another embodiment, a crankshaft is disclosed. The crankshaft may include a plurality of journals connected to counterweights via undercut regions. At least one of the plurality of journals may have a laser hardened crest-to-crest contact surface area defined by the undercut regions and extending to a depth to form a layer having a profile with a rate of change of about 1 µm in 2 mm. At least 70% of the profile may have constant dimensions. The profile may include end portions having a square pattern. The profile may include a central portion free of concavity. The plurality may include a pin journal. The depth may be no greater than 1 mm.

### BRIEF DESCRIPTION OF THE DRAWINGS

Figure 1 depicts a schematic view of an example vehicle combustion engine including a crankshaft and a camshaft in accordance with one or more embodiments;
Figure 2 depicts a perspective view of a laser hardened crankshaft;
Figure 3 depicts a perspective view of a laser hardened camshaft;
Figure 4A depicts a schematic cross-sectional view of a laser hardened main journal of the crankshaft depicted in Figure 2, the journal surface area having a case depth of less than about 1 mm;
Figure 4B depicts a schematic cross-sectional view of a laser hardened main journal of a prior art crankshaft, the journal surface area having a case depth of about 1.2 mm;
Figure 4C depicts a schematic cross-sectional view of an induction hardened main journal of a prior art crankshaft, the journal surface area having a case depth of about 2.5 mm;
Figure 5 depicts a perspective view of a laser hardened portion of a crankshaft depicted in Figure 2; and
Figure 6 depicts a perspective view of an induction hardened portion of a prior art crankshaft having induction hardened surfaces.

### DETAILED DESCRIPTION

Embodiments of the present disclosure are described herein. It is to be understood, however, that the disclosed embodiments are merely examples, and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present invention. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except where expressly indicated, all numerical quantities in this description indicating dimensions or material properties are to be understood as modified by the word "about" in describing the broadest scope of the present disclosure.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

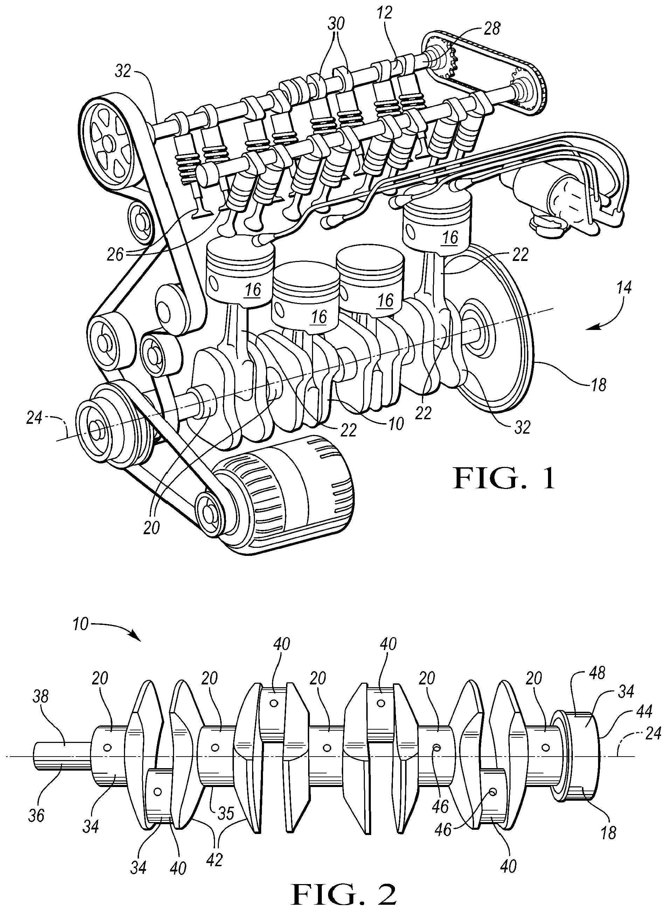

Crankshafts and camshafts are fundamental features in an automotive engine. Figure 1 depicts a schematic view of an exemplary crankshaft 10 and camshaft 12 as internal portions of a combustion engine 14. A crankshaft 10 is a mechanical part able to perform a conversion between reciprocating motion and rotational motion. In an internal combustion engine 14 of a vehicle, a crankshaft 10 translates reciprocating motion of the pistons 16 into rotational motion which enables the wheels to drive a vehicle forward. The crankshaft 10 may be any crankshaft 10 within the cylinder block or in the cylinder head. The crankshaft 10 is connected to a flywheel 18, an engine block (not depicted) using bearings on a number of main journals 20, and to the pistons 16 via their respective rods 22 so that all pistons 16 of an engine 14 are attached to the crankshaft 10. The crankshaft 10 regulates the movement of pistons 16 as it moves the pistons 16 up and down inside the cylinders (not depicted). The crankshaft 10 has a linear axis 24 about which it rotates, typically with several bearing journals 20 riding on replaceable bearings held in the engine block (not depicted).

Figure 1 further illustrates an exemplary camshaft 12. The camshaft 12 may be any camshaft 12 within the cylinder block or in the cylinder head. A camshaft 12 is used to operate valves 26 of internal combustion engines with pistons 16. It consists of a cylindrical rod 28 running the length of the cylinder bank (not depicted) and a number of lobes 30 protruding from it, one for each valve 26. The lobes 30 force the valves 26 open by pressing on the valve 26 as they rotate. The camshaft 12 is linked to the crankshaft 10. As the crankshaft 10 rotates, the camshaft 12 rotates along with it in a synchronized movement.

Crankshafts 10 and camshafts 12 can be monolithic or assembled from several pieces. Typically, these shafts 32 are forged from a steel bar through roll forging or casting in iron. The manufacturing process includes a number of steps, typically up to 25 operations including rough machining of the crankshaft, hardening, grinding or turning, and polishing. Most steel shafts 32 have induction hardened journal surfaces to increase their mechanical properties. Some high volume automotive and most high performance shafts use a more costly nitride process. Carburization and flame hardening are other exemplary methods of hardening. Yet, all of these technologies present a number of disadvantages, some of which are discussed below.

Induction hardening process has inherent drawbacks with respect to journal surface area coverage as induction hardening causes pattern proliferation and overheating of certain regions due to the nature of the inductive field. Difficulty of managing the physics of an induction field lie in applying it to desired regions while avoiding undesired regions. The current flow around oil holes during the induction hardening process typically causes bulging and necking conditions. Additionally, axial locating of inductors is often problematic. Coils and recipes must be designed to prevent both metallurgical damage in the chamfer area and pattern infringement into undercuts. These factors typically result in compromises with respect to hardness, surface coverage, and width of the surface hardening pattern. To obtain a higher percentage of surface coverage, a change in the journal design to a tangential journal design has been proposed. Yet, the design change still results in additional manufacturing compromises related to grinding and polishing.

Additionally, the typical case hardening methods induce distortion of the shaft. For example, induction hardening causes 50 to 70 µm distortion or more in the shaft axis. Therefore, it is customary that the amount of material removed in the finishing operation and process positioning errors be accounted for and added to the desired finish case depth. This requires that the hardening case depth be increased which may be accomplished by increasing heat time and power supply frequency. High frequency induction hardening typically produces a case depth of about 1.5 mm to 3 mm which represents an adequate case depth and enables remanufacturing without subsequent retreating. Yet, the product requires grinding after treating. Thus, the typical case depth before grinding is about 1.5 mm to 3 mm, but the case depth of an induction-hardened crankshaft or camshaft in a finished state is not less than 0.5 mm. Shallower case depths cannot be achieved by the induction process due to the level of manageable field strength and quench control.

Furthermore, the finishing process results in a relative increase in residual tensile stresses. To avoid tensile stresses, lower productivity grind cycles must be employed. To measure absolute stress, costly and time-consuming X-Ray diffraction must be utilized. Despite these efforts, the grind-harden sequence always results in some loss of desirable compressive stress. Compressive residual stress in the journal surfaces helps prevent cracks from forming and is generally good for fatigue properties.

The typical hardening methods present additional drawbacks. For example, coils are used for induction hardening. These copper coils have to be changed any time a new geometry on a journal is introduced. Such change is very costly and time consuming. Furthermore, a quench fluid and high electromagnetic field used during induction hardening present environmental and health challenges.

Nitriding has a number of disadvantages as well. For example, it is a relatively time consuming process, taking at least 8 hours. Additionally, the resulting depth of the hardened surface is relatively shallow, about 0.01 mm to 0.015 mm after a minimum of an 8-hour-long process, and the shaft has to be retreated if it is ever reground for service. While deeper depths can be obtained via nitriding, substantially longer time is required to achieve the depths deeper than 0.015 mm. The-maximum case depth is limited to about 0.5 mm, and time to achieve this depth is about 120 hours which renders this method impractical for high volume applications. Nitriding also produces an undesirable white layer on the surface of the shaft, requiring removal by polishing of the surface after processing.

Therefore, it would be desirable to provide a method of shaft surface hardening which would overcome one or more limitations of the previously devised manufacturing methods. It would be desirable to provide a low-distortion hardening method which would increase the overall hardened journal surface area, allow for wider surface hardening pattern of journal surfaces, and eliminate necking as well as the need to grind out the distortions which occur during the induction hardening process. Additionally, it would be desirable to develop a hardening method which would eliminate the soft zone around the oil hole on a journal. Additionally still, it would be desirable to provide a flexible hardening method which would result in cost and time savings, reduce cycle time, eliminate the need for finish grind stock from the total case depth, eliminate copper coil tooling, and increase environmental safety by eliminating quench fluid and high electromagnetic field.

Laser hardening represents an alternative method of hardening precision journal surfaces for enhanced wear properties. Yet, the current laser methods have focused on replication of induction patterns and case depths. The laser maximum case depth is limited by metallurgical surface damage caused by overheating. Thus, the laser-hardened case depth prior to grind on a typical laser-hardened crankshaft is about 1.2 mm. Unlike induction-hardened case depths, laser-hardened minimal case depths can be achieved without risk. At maximum depth of about 1.2 mm, overheating of the undercut regions dictates the width of the hardening pattern with respect to crankshaft fatigue requirements and limits the hardening pattern to up to about 85% of the journal surface area.

It has now been surprisingly discovered that the minimum case depth requirements may be reduced below 1.2 mm while delivering satisfactory wear properties, enabling refurbishment or regrinding of the components without retreatment, and maximizing throughput with the laser hardening process. Additionally, since the case depth of the laser hardening process affects processing time, lowering the case depth requirements significantly reduces cycle time by up to 50% or more.

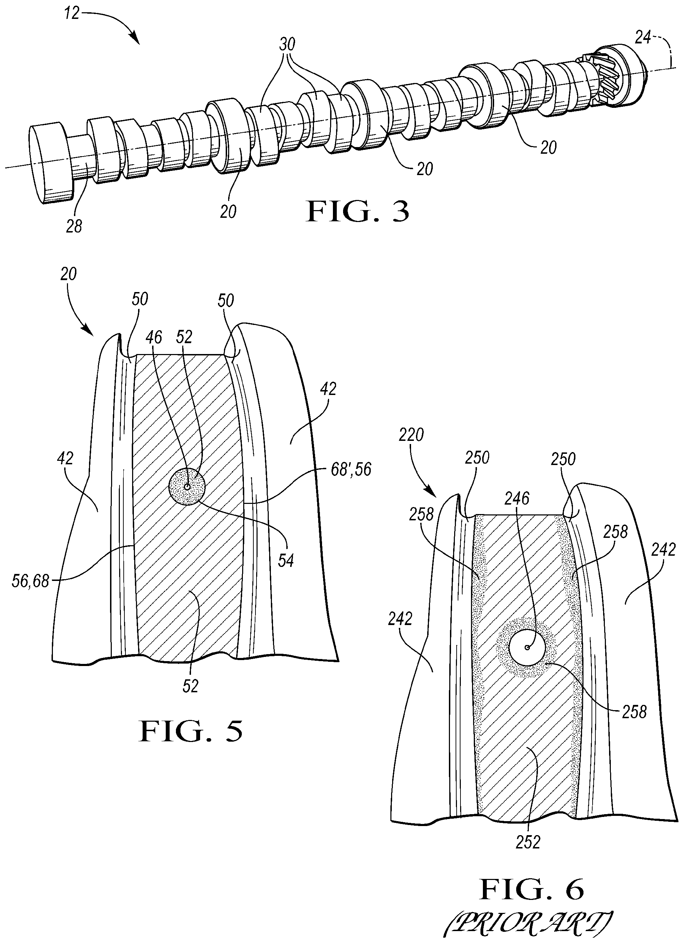

According to one or more embodiments, a method is provided which includes subjecting a shaft 10, 12 to laser hardening, specifically, laser hardening one or more surface areas of a shaft 10, 12. Figures 2 and 3 depict non-limiting examples of a crankshaft 10 and a camshaft 12, respectively. Each shaft 10, 12 includes one or more surfaces 34 to be hardened which form a band 35 around a perimeter of the journal. Fig. 2 depicts an exemplary crankshaft 10 having a post 36 at the first end 38, main journals 20, and pin/rod journals 40 connected to a plurality of counterweights or bearings 42 via undercut regions (not depicted), and a flywheel 18 at the second end 44. The main journals 20, also called the main bearing journals or fillets, include an oil hole 46 which serves for distribution of lubricating oil to the bearings. The pin journals 40, also known as crankpins or crankpin fillets, also include an oil hole 46. The crankshaft 10 further includes oil ducts facilitating lubrication, which are not depicted. The crankshaft 10 may further include an oil seal 48 located on the flywheel 18. Figure 3 depicts a non-limiting example of a camshaft 12 having a cylindrical rod 28, a plurality of main journals 20, and a plurality of lobes 30.

As is depicted in Figures 2 and 3, the one or more surfaces 34 to be hardened may include a surface on a main journal 20, a pin journal 40, an oil seal 48, a lobe 30, or a running surface 62. The number of main journals 20, pin journals 40, oil seals 48, lobes 30, and their respective surfaces to be hardened may differ and depend on the desirable parameters of the shaft 32 which is being manufactured. A running surface 62 may be any cylindrical or shouldered surface or any surface in contact with a journal such as a bushing surface 64 or a shouldered wall surface 66.

The method may include a step of generating a surface hardening pattern from a 3-D model of the shaft 32 to be laser hardened. The method may include a step of programming a microprocessor unit (MPU) to generate the surface hardening pattern. In one or more embodiments, the generated surface hardening pattern may include a series of preselected points, a portion of, or the entire surface geometry of the shaft 10, 12. The surface hardening pattern may include one or more surfaces 34 on one or more main journals 20, pin journals 40, lobes 30, oil seals 48, or running surfaces 62.

The method may include determining dimensions of the surface area to be hardened. The method may include a step of adjusting a spot size of the laser beam according to the dimensions of the surface area to be hardened, specifically the depth and width of the surface area to be hardened 34. The method may include a step of directing a laser beam from the laser power unit to the surface 34 of the shaft 10, 12 to be laser hardened according to the surface hardening pattern. The method may include adjusting one or more parameters of the surface hardening pattern before and/or during the laser hardening operation.

In one or more embodiments, the laser hardening may be facilitated by at least one laser power unit. A plurality of laser power units may be utilized. For example, one laser power unit may be used for tempering the surfaces 34 to be hardened. Such laser could be a lower power laser such as a 1.0 kW laser. The second laser power unit could be a high power laser unit facilitating the hardening. The high power unit could be, for example, a 6.0 kW laser. A laser power unit having a different power may be used, for example any laser having power ranging from 500W to 50kW may be suitable. Alternatively, both tempering and hardening may be facilitated by one laser power unit. Alternatively still, tempering may be omitted because the laser microstructure is less than 100% martensitic. The temperature to be achieved during the hardening process should not exceed about 1260°C to prevent overheating of the shaft material.

The method contemplates using different types of lasers as the heat source for the hardening operation. Exemplary non-limiting examples of suitable lasers include lasers having different types of active gain media. The gain media may include liquid such as dye lasers in which the chemical make-up of the dye determines the operational wavelength. The liquids may be organic chemical solvent such as methanol, ethanol, and ethylene glycol containing a dye such as coumarin, rhodamine, and fluorescein. The gain media may include gas such as CO₂, Ar, Kr, and/or gas mixtures such as He-Ne. The gain medium may be metal vapor such as Cu, HeCd, HeHg, HeSe, HeAg, or Au. The gain media may include solids such as crystals and glass, usually doped with an impurity such as Cr, Nd, Er, or Ti ions. The solid crystals may include YAG (yttrium aluminum garnet), YLF (yttrium lithium fluoride), LiSAF (lithium strontium aluminum fluoride), or sapphire (aluminum oxide). Non-limiting examples of solid-state gain media doped with an impurity include Nd:YAG, Cr:sapphire, Cr:LiSAF, Er:YLF, Nd:glass, or Er:glass. The gain medium may include semiconductors having a uniform dopant distribution or a material with differing dopant levels in which the movement of electrons causes laser action. Non-limiting examples of semiconductor gain media may include InGaAs, GaN, InGaN, and InGaAsP. The laser may be a high power fiber laser created from active optical fibers doped with rare earth ions and semiconductor diodes as the light source to pump the active fibers.

The at least one laser power unit may be connected to the MPU also known as a central processing unit capable of accepting digital data as input, processing the data according to instructions stored in its memory, and providing output. The MPU may include mathematical modeling software which is capable of processing input data. Exemplary input data may include information about a 3-D model of a shaft 32 having surfaces 34 to be hardened; parameters for new geometry such as hardening width, energy balance, or the like; parameters relating to oil holes such as the oil hole radius, offset from the center of a journal, or the like.

The method implements laser hardening into the depth of less than 1.2 mm, 1.0 mm, 0.8 mm, or 0.5 mm. At these depths as well as at deeper case depths, distortion of the main journals 20 is only minimal in comparison with induction hardening. The distortion of the main journals 20 caused by laser hardening may be about 5 µm to 10 µm. In comparison, an induction-hardened shaft may feature about 50 µm to 70 µm distortion or more on the main journals. Therefore, the laser hardening process distortion levels even at deeper depths are such that heat-related distortion is manageable. The laser-hardened case depth can be reduced to less than about 1 mm also because accounting for grinding stock to compensate for induction hardening distortions is no longer necessary. This in turn enables significantly shorter cycle time. Increasing scan speeds at the same or lower power levels can achieve hardening shallower case depths in a shorter time.

The method may include hardening one or more surfaces 34 to the case depth of about 0.05 mm to 1.1 mm, 0.15 mm to 0.8 mm, or 0.2 mm to 0.5 mm. For example, if the requirements of the final product are 0.2 mm, hardening may be done to the depth of 0.6 mm to 0.7 mm. Laser hardening may save up to 50% of cycle time associated with hardening of a shaft 32 that requires a hardening depth of more than about 1.2 mm. Hardening shallower than about 0.5 mm contributes to even shorter cycle time as less time is required for scanning and applying heat to the surfaces 34. Unlike the prior art shafts, the laser hardened shaft 32 of the present disclosure may be reground and/or remanufactured without repeating the hardening operation even if the case depth is only about 0.2 mm.

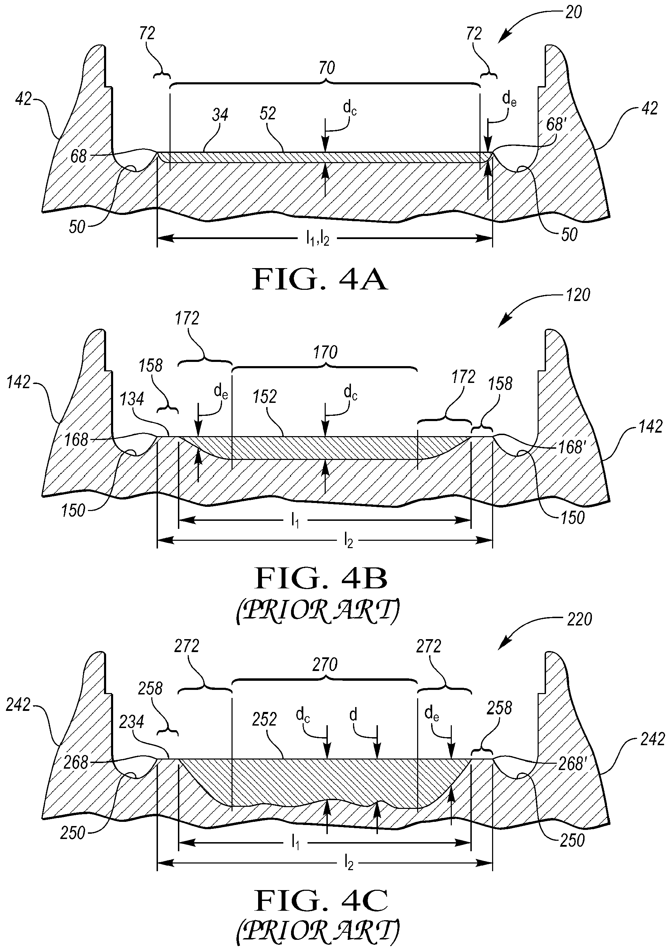

The shallow case depth of less than about 1 mm enables wider laser hardening pattern than the patterns achievable while implementing case depth deeper than about 1.2 mm. The pattern may expand closer to the edges of the surfaces 34 or reach the very edges of the surfaces 34. The wider pattern may include up to 100% surface area of the one or more surfaces 34 to be laser hardened such that the band 35 does not contain any unhardened portions 58. The wider pattern includes more than 80%, 85%, 90%, 95%, or 99% of the one or more surfaces 34 to be laser hardened and/or of the band 35. As can be seen in Figure 4A, which depicts a profile of an exemplary journal contact surface which is laser hardened 34 having a shallow case depth of less than about 1 mm, the laser hardened area extends from crest 68 to crest 68' which is defined by two undercut regions 50.

In comparison, only up to 80% of a journal surface area 134 having a depth of about 1.2 mm may be laser hardened, as Figure 4B illustrates. Laser hardening a wider pattern to the depth of about 1.2 mm could jeopardize the journal strength as it could induce conditions which generate risk to subsequent fillet rolling operations and/or negatively impact the undercut regions 50 by overheating. The laser hardened layer 152 depicted in Figure 4B does not reach the crests 168, 168'. And only up to 85% of a journal surface area 234, depicted in Figure 4C, having a case depth of about 2.5 mm and being hardened by an induction process may be hardened. Just as the layer 152 in Figure 4B, the laser hardened layer 252, illustrated in Figure 4C, is not wide enough to extend across the entire distance between the crests 268 and 268' defined by the undercut regions 250. Specifically, clamshell induction hardening may achieve hardening of only up to 75% surface area and orbital induction hardening up to 85% surface area. Thus, providing shallow case depth laser hardening enables a significantly wider surface hardening pattern. The unhardened areas are depicted in Figures 4B and 4C as 158 and 258, respectively.

A perspective view of a journal 20 having near-100% journal surface area laser-hardened is depicted in Figure 5. As Figure 5 illustrates, the laser-hardened journal 20 of a shaft 32 may include a hardened surface area 52 directly adjacent to the edge 54 of the oil hole 46 and extending between crests 68, 68' defining edges 56 of the undercut regions 50. The oil hole 46 and the undercut regions 50 are free from metallurgical transformation. The surface area of the oil hole 46 and the undercut regions 50 thus remain completely unhardened.

In contrast, a clamshell induction-hardened journal 220 is depicted in Figure 6. The hardened surface area 252 on the journal 240 does not include the area adjacent to the oil hole 246 and the area adjacent to the undercut regions 250. The journal 220 of Figure 6 thus includes non-hardened areas 258 which remain soft. The dimensions of the soft area 258 around the oil hole 246 may reach up to 2-3 mm radially around the oil hole 246. The soft area 258 contributes to undesirable fatigue stress and lower bearing seizure resistance. Additionally, induction hardening of the acute side of the oil hole 246 presents other challenges such as difficulty in preventing overheating of the cross sectional area of the oil hole 246. Such overheating induces damage which in turn affects fatigue strength. Adjusting the induction hardening process to alleviate overheating would in turn result in a compromised level of hardness or soft spots 258. Additionally, traditional induction hardening may affect the surface area of the oil hole 246 and/or the area of the undercut regions 250 such that the areas 246 and/or 250 are heat-affected and subjected to undesirable metallurgical changes.

As can be further seen in Figure 6, induction hardening causes necking or narrowing of the induction pattern as the current flows around the oil hole 246 and/or the undercut regions 250. The absence of ferrous volume around the oil hole 246 and the undercut regions 250 results in higher current flow, resulting in bulging of the pattern at the oil hole 246 and around the undercut regions 250. To avoid necking, induction coil design and/or the amount of current has to be adjusted as necking presents a fatigue stress concern. Yet, when the coil design and/or current are reduced, the area near the oil hole 246 and the undercut regions 250 results in a narrower, necked, pattern. In contrast, due to the nature, flexibility, and precision of laser hardening, the laser-hardened journal 20 is free of necking, as Figure 5 illustrates.

Referring back to Figures 4A-4C, it can be seen that the laser hardened layer 52 in Figure 4A features different dimensions and a shape of the profile than the hardened layers 152 and 252 depicted in Figures 4B and 4C, respectively. The laser hardened layer 52 in Figure 4A includes a central region 70 and end regions 72. The layer 52 has a length *l₁*, the distance between crests 68 and 68' is designated as length *l₂*. *l₁* may equal *l₂* in at least a portion of the layer 52 such as the very top portion at the journal surface 34. As a result, the crest-to-crest contact surface area does not contain any unhardened portions. Alternatively, *l₁* may equal *l₂* throughout the entire depth of the layer 52, or at least in 50%, 60%, 70%, 80%, 90% or more of the depth of the layer 52.

The layer 52 may be about 1 mm or less deep, as was described above. The central region 70 may have a depth *d_{c}*, which may be substantially the same or constant throughout the entire central region 70. The end regions 72 of the layer 52 may have the same or different depth *dₑ* than the depth of the central region 70 *d_{c}*. The depth *d_{c}* may equal or be greater than *dₑ.* The depth *dₑ* of the end regions 72 depends on the shape of the end regions 72. The end regions 72 may have a substantially square pattern or rounded shape. Other shapes are contemplated. For example, if the shape of the end regions 72 is substantially square, the depth *dₑ* may be the same or substantially similar as the depth *d_{c}.* The depth of the layer 52 may thus be constant or substantially the same in about 70%, 72%, 74%, 76%, 78%, 80%, 84%, 86%, 88%, 90%, 92%, 94%, 96% or more of the layer 52.

Unlike the layer 52, the laser hardened layer 152 depicted in Figure 4B has a depth greater than 1 mm, specifically about 1.2 mm, as was referenced above. The end regions 172 do not have a substantially square profile and feature a triangular shape or rounded shape. Thus, the depth *dₑ* varies throughout the end regions 172 and is not substantially the same as the depth *d_{c}* in the central region 170. The depth in the central region *d_{c}* is greater than the depth in the end regions *dₑ.* Due to the varying depth of the end regions 172, the depth of the layer 152 may be the same in up to about 65% of the layer 152. The length *l₁* of the hardened layer 152 is smaller than the distance between crests 168 and 168' designated as length *l₂* such that soft or unhardened portions 58 remain between the layer 152 and the undercut regions 150.

Likewise, the profile of the induction-hardened surface 252 differs from the profile of the layer 52 as the layer 252 typically displays irregularities such as protrusions or peaks 269 and a central concave region 270. The depth of the layer 252 thus differs throughout the layer 252. Specifically, the depth *d_{c}* within the central region 270 is smaller than the depth d outside of the central region due to concavity which is inherent with the induction process. Additionally, the end regions 272 are rounded, may feature a shape of a triangle, or both and do not feature a square pattern. The depth of the end regions 272 *dₑ* differs throughout the end regions 272. The depth *dₑ* is smaller than the depth *d*, and may be smaller or greater than *d_{c}.* The depth of the layer 252 may be about 2.5 mm to 3 mm or greater prior to grinding, as was explained above. Due to the varying depth of the end regions 172, the central region 270, and the irregularities in the region outside of the central region 270, the depth of the layer 252 may be substantially the same in only up to about 55% of the layer 252. The length *l₁* of the layer 252 is smaller than the distance between crests 268 and 268' designated as length *l₂* such that unhardened portions 58 remain between the layer 252 and the undercut regions 250.

The journal profile may be straight or crown or barrel-shaped, thus non-straight. Straightness relates to a profile being uniformly level/straight with no defined barrel shape. The crown profile may have a relatively large radius or a prescribed level of barrel defined by about 1.5 µm to 3 µm radially. The barrel-shape relates to a convex shape. An hourglass or concave shape is not desirable as it may result in isolated peak loading of the journals. The barrel-shape may be added to accommodate, for example, cylinder block bulkhead deflections or a crankshaft deflection due to firing loads which may effectively close the crank pins, resulting in undesirable pin-loading of main journals 20. Whether the profile shape is straight or barrel-shaped, consistent profile is required. While an induction process must use a narrower pattern or abandon the fillet rolling and straightening method, the laser method can harden a band 35 closer to the undercuts 50, the unhardened area 58 is reduced, and subsequent profile is more uniform when compared to the induction hardened profile. The laser method also allows utilization of the fillet rolling which results in straightening shafts more readily and lowers grind stock levels while also providing near-100% hardened journal area 52 while increasing the effective bearing width.

The difference between the profiles depicted in Figures 4A-4C may be also expressed as the rate of change of the profile. The rate of change may be defined as µm of change in a length. Since the irregularities in the profile such as the afore-mentioned peaks 269 and the concavity in the central region 270 may result in journal failure, elimination of the irregularities and concavity is a goal. A straighter profile, or a profile with lower rate of change of the profile, provides more contact surface area to provide bearing support which translates into an increased lifetime of the journal. The induction-hardened layer 252 typically has the rate of change of about 1 µm in 2-3 mm. Utilizing the method disclosed herein, a rate of change of 1 µm in 2 mm or less may be achieved. Laser hardening thus enables a higher degree of control over straightness of the profile and/or profile uniformity than induction hardening.

The rate of change and straightness of the laser heat-treated surfaces on the main journals 20 of a crankshaft were measured via an Adcole High-Speed Crankshaft Gage measuring machine manufactured by the Adcole Corporation. The machine provides robot-fed 100% crankshaft inspection having submicron accuracy and presents a recognized standard in camshaft and crankshaft gauging. The results are provided in Table 1 below. The induction hardened surfaces on the main journals 220 of an induction-hardened crankshaft were obtained using the same machine, results of which are referenced in Table 2 below. Comparison of the data in both tables shows that the average straightness achievable by the laser heat treatment is nearly 50% better than straightness attainable via an induction process.

**Table 1: Straightness of main journal laser hardened surfaces on a laser hardened crankshaft**

| **Crankshaft no.** | **Main journal 1 straightness** | **Main journal 2 straightness** | **Main journal 3 straightness** | **Main journal 4 straightness** | **Average straightness** |
|---|---|---|---|---|---|
| | **[µm]** | **[µm]** | **[µm]** | **[µm]** | **[µm]** |
| 1 | 1.4 | 1.9 | 1.9 | 1.3 | 1.6 |
| 2 | 1.2 | 1.8 | 1.7 | 1.7 | 1.6 |
| 3 | 1.2 | 1.8 | 1.4 | 1.5 | 1.5 |
| 4 | 1.0 | 1.9 | 1.6 | 1.8 | 1.6 |
| 5 | 1.1 | 1.5 | 1.5 | 2.0 | 1.5 |
| 6 | 1.4 | 1.2 | 0.7 | 1.2 | 1.1 |
| 7 | 1.6 | 1.5 | 0.8 | 1.5 | 1.4 |
| 8 | 0.9 | 1.2 | 0.9 | 2.0 | 1.3 |
| 9 | 1.1 | 1.3 | 1.1 | 1.8 | 1.3 |
| 10 | 1.4 | 1.9 | 1.0 | 1.5 | 1.5 |

**Table 2: Straightness of main journal induction hardened surfaces on an induction hardened crankshaft**

| **Crankshaft no.** | **Main journal 1 straightness** | **Main journal 2 straightness** | **Main journal 3 straightness** | **Main journal 4 straightness** | **Average straightness** |
|---|---|---|---|---|---|
| | **[µm]** | **[µm]** | **[µm]** | **[µm]** | **[µm]** |
| 1 | 1.6 | 2.3 | 2.4 | 2.1 | 2.1 |
| 2 | 2.1 | 2.7 | 3.2 | 2.5 | 2.6 |
| 3 | 2.1 | 2.6 | 3.5 | 2.2 | 2.6 |
| 4 | 1.9 | 2.9 | 2.7 | 2.6 | 2.5 |
| 5 | 2.7 | 2.9 | 3.5 | 2.6 | 2.9 |
| 6 | 2.1 | 2.4 | 3.6 | 3.1 | 2.8 |
| 7 | 1.6 | 2.2 | 2.1 | 1.8 | 1.9 |
| 8 | 1.8 | 2.0 | 2.4 | 2.0 | 2.1 |
| 9 | 2.0 | 2.2 | 2.3 | 2.1 | 2.2 |
| 10 | 1.9 | 2.1 | 2.4 | 2.0 | 2.1 |

Due to advantages mentioned above, laser hardening may be applied when it is desirable to harden all of the journal surfaces except the undercut region 50, the oil hole 46, or a combination thereof. Thus, crankshafts 10 which require seal surface hardening may be processed via laser hardening as well. The method may be likewise applied to camshafts 12. One of the advantages of laser-hardening camshaft 12 surfaces such as main/cam journals 20 or lobes 30 is limiting overheating of these surfaces which may typically have a tendency to overheat due to a lack of heat sink. Thus, a narrow hardening pattern typical for the cam journals 20 and lobes 30 could be widened up to about 80%, 90%, or 100% of cam journal surface or lobe surface while preventing metallurgical damage to the surfaces.

In one or more embodiments, the method may include additional manufacturing steps after the shaft 32 is laser hardened. In at least one embodiment, the method may include polishing. Polishing may include any conventional method of polishing of a metal surface of a laser hardened shaft 32. The method may include removal of certain amount of material stock.

Additionally still, the above-described method provides consistent, near-100% hardened journal surface area while ensuring no infringement into the undercut fatigue zone 50 which otherwise poses reliability risk. The method also presents an additional advantage over induction hardened tangential fillet designs. The laser process described above utilizes fillet rolling, which enables straightening of the shaft 32 before grinding such that the grind stock may be reduced. Thus, utilization of the laser technique and fillet rolling offers near-100% hardened journal surface and roll straightening. On the other hand, to achieve maximum achievable hardening pattern with induction hardening, additional grind stock must be added due to greater distortion. Additionally, an induction hardened journals with undercuts in combination with fillet rolling may lead to crankshaft failure such as a cracked crankshaft and low fillet rolling tool life.

While exemplary embodiments are described above, it is not intended that these embodiments describe all possible forms of the disclosure. Rather, the words used in the specification are words of description rather than limitation, and it is understood that various changes may be made without departing from the spirit and scope of the disclosure. Additionally, the features of various implementing embodiments may be combined to form further embodiments of the disclosure.

## Claims

1. An automotive shaft comprising:
a journal having a crest-to-crest contact surface area defined by and between undercut regions of the shaft, an entirety of the crest-to-crest contact surface area being laser hardened to a depth no greater than 1 mm to form a layer that does not contain unhardened portions.

2. The shaft of claim 1, wherein the shaft is a crankshaft or a camshaft.

3. The shaft of claim 1, wherein the journal is a main journal.

4. The shaft of claim 1, wherein the entirety of the crest-to-crest contact surface area is laser hardened to a depth no greater than about 0.5 mm.

5. The shaft of claim 1, wherein more than 70% of the layer has a constant depth.

6. The shaft of claim 1, wherein a portion of the crest-to-crest contact surface area surrounds an oil hole.

7. A crankshaft comprising:
main and pin journals connected to counterweights via undercut regions, wherein one of the journals has a surface area extending between and terminating at crests formed by two of the undercut regions to define a circumferential band, wherein an entirety of an area of the band is laser hardened to form a layer that reaches a depth not greater than about 1 mm and that does not contain unhardened portions.

8. The crankshaft of claim 7, wherein a portion of the band surrounds an oil hole having an unhardened surface area.

9. The crankshaft of claim 7, wherein the one journal is a main journal.

10. The crankshaft of claim 7, wherein the layer reaches a depth not greater than about 0.5 mm.
